# EUROPEAN PATENT APPLICATION

(11) **EP 0 992 890 A2**
(43) Date of publication of application: **12.04.2000**
(21) Application number: 99400554.4
(22) Date of filing: 08.03.1999
(51) Int. Cl.: G06F 9/32

(54) **A processor**

(30) Priority: 06.10.1998 EP 98402455
(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Laurenti, Gilbert, 06570 Saint Paul de Vence (FR); Djafarian, Karim, Batiment B1 06140 Vence (FR); Ponsot, Eric, 347 route de Cagnes 06140 Vence (FR); Boyodjian, Alain, 06220 Vallauris (FR); Gillet, Vincent, 06650 Le Rouret (FR)
(74) Representative: Potter, Julian Mark

(57) **Abstract**

A processing engine is described having an execution mechanism which may be configured to modify a value whilst a condition is true. The execution mechanism switches the processing engine to one of a plurality of tasks for the condition becoming false. Preferably, the value is a repeat loop counter value or a data value modified during a repeat loop.

## Description

### FIELD OF INVENTION

The present invention relates to processing engines and methods of operation therfor, in particular, but not exclusively, to digital signal processors.

### BACKGROUND OF INVENTION

Many different types of processing engines are known, of which microprocessors are but one example. For example, Digital Signal Processors (DSPs) are widely used, in particular for specific applications. DSPs are typically configured to optimise the performance of the applications concerned and to achieve this they employ more specialised execution units and instruction sets. They have not, however, been provided with the parallel instruction execution architectures found in microprocessors and do not operate under the operating systems used to control such microprocessors.

In a DSP or microprocessor for example, machine-readable instructions stored in a program memory are sequentially executed by the processing engine in order for the processing engine to perform operations or functions. The sequence of machine-readable instructions is termed a "program". Although the program instructions are typically performed sequentially, certain instructions permit the program sequence to be broken, and for the program flow to "Branch" or "Jump" to another part of the program, where sequential program flow re-starts. Often the later program sequence includes an instruction which "Returns" the program flow to part of the original program sequence just after the "Branch" or "Jump" instruction.

The program portion terminated by the "Return" is often termed a "sub-routine", and Branching or Jumping to a "sub-routine" is referred to as "Calling" a sub-routine. In this way, often used instructions do not to be included throughout a program, but instead may be coded once as a sub-routine and called from the main program as necessary.

Typically a sub-routine is identified by a so-called "label". A label is an alphanumeric tag used in an assembly program to identify the memory location of the first instruction for the sub-routine. Often, the memory location assigned to the label is not the location of the first sub-routine instruction, but a pointer to the memory location of the first instruction.

In conventional processing engines, a register such as an accumulator is loaded with the label data for calling a sub-routine. Such loading of the accumulator can take up to 12 processor cycles.

The present invention is directed to improving the performance of processing engines such as, for example but not exclusively, digital signal processors.

### SUMMARY OF INVENTION

Particular and preferred aspects of the invention are set out in the accompanying independent and dependent claims. Combinations of features from the dependent claims may be combined with features of the independent claims as appropriate and not merely as explicitly set out in the claims.

In accordance with a first aspect of the invention, there is provided a processing engine comprising an instruction execution mechanism configurable to modify a value for a condition being true, and to switch operation of a processing engine to one of a plurality of tasks in accordance with a current value for said condition being false.

In accordance with a second aspect of the invention, there is provided a method for operating a processing engine, comprising modifying a value for a condition being true, and switching operation of the processing engine to one of a plurality of tasks for the condition being false.

In accordance with a preferred embodiment of the invention the processing engine is configured to respond to a first instruction for executing a repeat loop for modifying the value for the condition being true. Advantageously, the value is located on a processing core for the processing engine, and thus is quickly accessible for determining which of the plurality of tasks the processing engine should switch to.

Preferably the execution mechanism is configurable to execute a data instruction which is associated with the condition, and further preferable to provide a result which determines whether said condition is true or false. Typically, the data instruction can be disposed within the body of a repeat loop.

In particular embodiments the execution mechanism is configurable to respond to a second instruction having as an argument the current value. That current value preferably being one of a repeat loop counter value, a value derived by the data instruction or some further data instruction. Since typically the results of the data instructions, and the repeat loop counter, are stored within the processing core for the processing engine access to those values is very quick for determining which of the plurality of tasks the processing engine should switch to.

Suitably, the processing engine comprises a repeat loop control mechanism which includes a repeat counter index register. The execution mechanism is configurable to switch to one of the plurality of tasks in accordance with the content of the repeat counter index register.

Generally, the processing engine is operable in accordance with a sequence of machine-readable instructions which are stored in a program memory pending their input to the processing engine, and the one of a plurality of tasks is executable in accordance with one or more instructions sequentially stored in the program memory.

Suitably, the processing engine further comprises a program counter for pointing to a program memory location for a next instruction for input to the processing engine. The execution mechanism is responsive to the second instruction to modify the program counter contents in accordance with the current value in order to point to a memory location corresponding to the one of a plurality of tasks. Typically, the memory location corresponding to the task comprises a first instruction of one or more instructions. Optionally, the memory location corresponding to the one of a plurality of tasks comprises a pointer to a program memory location comprising a first instruction of the one or more instructions.

Particularly suitable embodiments in accordance with the invention are a processor, a digital signal processor or an integrated circuit comprising a processing engine in accordance with the invention.

Generally, the processing engine is configured to respond to more than one predetermined condition, respective conditions corresponding to respective ones of a plurality of tasks.

In a particularly suitable embodiment, the repeat loop is a while loop.

A particularly useful embodiment of the invention comprises a wireless communications device comprising a telecommunications device comprising a processing engine as described above, and further comprising a user interface including a display, a key pad or keyboard for inputting data to the communication device, and a transceiver and an antenna.

### BRIEF DESCRIPTION OF THE DRAWINGS

Particular embodiments in accordance with the invention will now be described, by way of example only, and with reference to the accompanying drawings in which like reference signs are used to denote like parts, unless otherwise stated, and in which:
Figure 1 is a schematic block diagram of a processor in accordance with an embodiment of the invention;
Figure 2 is a schematic block diagram illustrating the four main elements of the core processor of Figure 1;
Figure 3 is a schematic block diagram illustrating a P Unit, A Unit and D Unit of the core processor of Figure 2;
Figure 4 is a schematic illustration of the operation of an I Unit of the core processor of Figure 2;
Figure 5 is a diagrammatic illustration of the pipeline stages for the core processor of Figure 2;
Figure 6 is a diagrammatic illustration of stages of a thread through the pipeline of the processor of Figure 1;
Figure 7 is a schematic illustration of the core processor of Figure 2 coupled to Memory Interface Unit;
Figure 8 schematically illustrates loop control circuitry in accordance with a preferred embodiment of the invention;
Figure 9 schematically illustrates the structure of the switch instruction and labels in program memory for a preferred embodiment of the invention;
Figure 10 is a schematic illustration of an instruction pipeline thread in accordance with a preferred embodiment of the invention; and
Figure 11 is a schematic illustration of a wireless communication device suitable for incorporating in an embodiment of the invention.

### DESCRIPTION OF THE PREFERRED EMBODIMENTS

Although the invention finds particular application to DSPs, implemented for example in an Application Specific Integrated Circuit (ASIC), it also finds application to other forms of processing engines.

The basic architecture of an example of a processor according to the invention will now be described.

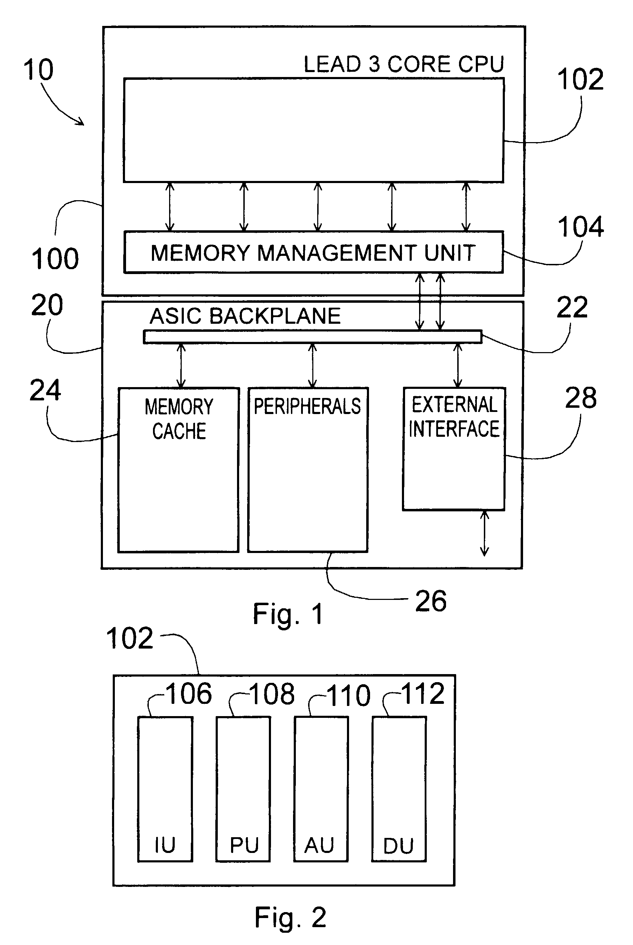

Figure 1 is a schematic overview of a processor 10 in accordance with an embodiment of the present invention. The processor includes a processing engine 100 and a processor backplane 20. In a particular example of the invention, the processor is a Digital Signal Processor 10 implemented in an Application Specific Integrated Circuit (ASIC).

As shown in Figure 1, the processing engine 100 forms a central processing unit (CPU) with a processing core 102 and a memory interface unit 104 for interfacing the processing core 102 with memory units external to the processor core 102.

The processor backplane 20 comprises a backplane bus 22, to which the memory management unit 104 of the processing engine is connected. Also connected to the backplane bus 22 is an instruction cache memory 24, peripheral devices 26 and an external interface 28.

It will be appreciated that in other examples, the invention could be implemented using different configurations and/or different technologies. For example, the processing engine 100 could form the processor 10, with the processor backplane 20 being separate therefrom. The processing engine 100 could, for example be a DSP separate from and mounted on a backplane 20 supporting a backplane bus 22, peripheral and external interfaces. The processing engine 100 could, for example, be a microprocessor rather than a DSP and could be implemented in technologies other than ASIC technology. The processing engine or a processor including the processing engine could be implemented in one or more integrated circuits.

Figure 2 illustrates the basic structure of an embodiment of the processing core 102. As illustrated, this embodiment of the processing core 102 includes four elements, namely an Instruction Buffer Unit (I Unit) 106 and three execution elements. The execution units are a Program Flow Unit (P Unit) 108, Address Data Flow Unit (A Unit) 110 and a Data Computation Unit (D Unit) for executing instructions decoded from the Instruction Buffer Unit (I Unit) 106 and for controlling and monitoring program flow.

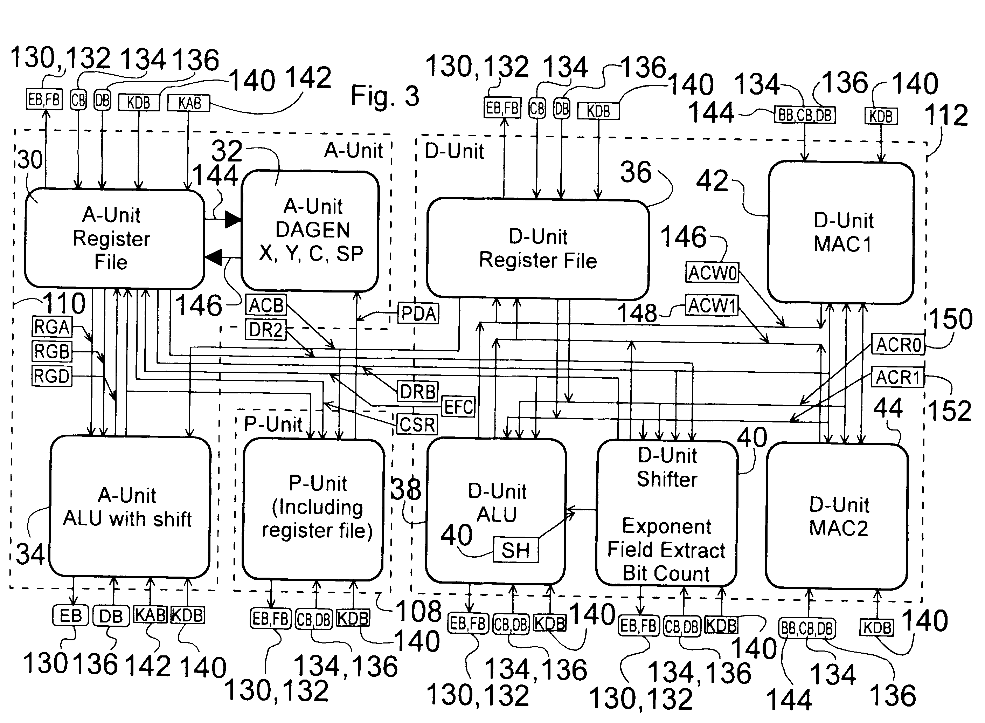

Figure 3 illustrates the execution units P Unit 108, A Unit 110 and D Unit 112 of the processing core 102 in more detail and shows the bus structure connecting the various elements of the processing core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write busses (EB,FB) 130,132, Data Read busses (CB,DB) 134,136 and a coefficient program bus (BB) 138. Additionally, the P Unit 108 is coupled to sub-units within the A Unit 110 and D Unit 112 via various busses such as CSR, ACB and RGD, the description and relevance of which will be discussed hereinafter as and when necessary in relation to particular aspects of embodiments in accordance with the invention.

As illustrated in Figure 3, in the present embodiment the A Unit 110 includes three sub-units, namely a register file 30, a data address generation sub-unit (DAGEN) 32 and an Arithmetic and Logic Unit (ALU) 34. The A Unit register file 30 includes various registers, among which are 16 bit pointer registers (AR0,...AR7) and data registers (DR0,...DR3) which may also be used for data flow as well as address generation. Additionally, the register file includes 16 bit circular buffer registers and 7 bit data page registers. As well as the general purpose busses (EB,FB,CB,DB) 130,132,134,136, a coefficient data bus 140 and a coefficient address bus 142 are coupled to the A Unit register file 30. The A Unit register file 30 is coupled to the A Unit DAGEN unit 32 by unidirectional buses 144 and 146 respectively operating in opposite directions. The DAGEN unit 32 includes 16 bit X/Y registers and coefficient and stack pointer registers, for example for controlling and monitoring address generation within the processing engine 100.

The A Unit 110 also comprises a third unit, the ALU 34 which includes a shifter function as well as the functions typically associated with an ALU such as addition, subtraction, and AND, OR and XOR logical operators. The ALU 34 is also coupled to the general purpose buses (EB,DB) 130,136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by busses RGA and RGB for receiving address and data register contents and by a bus RGD for forwarding address and data registers in the register file 30.

In accordance with the illustrated embodiment of the invention D Unit 112 comprises a D Unit register file 36, a D Unit ALU 38, a D Unit shifter 40 and two Multiply and Accumulate units (MAC1,MAC2) 42 and 44. The D Unit register file 36, D Unit ALU 38 and D Unit shifter 40 are coupled to buses (EB,FB,CB,DB and KDB) 130, 132, 134, 136 and 140, and the MAC units 42 and 44 are coupled to the buses (CB,DB,KDB) 134, 136, 140 and Data Read bus (BB) 144. The D Unit register file 36 includes 40-bit accumulators (AC0,...AC3) and a 16-bit transition register. The D Unit 112 can also utilise the 16 bit pointer and data registers in the A Unit 110 as source or destination registers in addition to the 40-bit accumulators. The D Unit register file 36 receives data from the D Unit ALU 38 and MACs 1&2 42, 44 over accumulator write buses (ACW0,ACW1) 146, 148, and from the D Unit shifter 40 over accumulator write bus (ACW1) 148. Data is read from the D Unit register file accumulators to the D Unit ALU 38. D Unit shifter 40 and MACs 1&2 42, 44 over accumulator read busses (ACR0, ACR1) 150, 152. The D Unit ALU 38 and D Unit shifter 40 are also coupled to sub-units of the A Unit 108 via various buses such as EFC, DRB, DR2 and ACB for examples which will be described as and when necessary hereinafter.

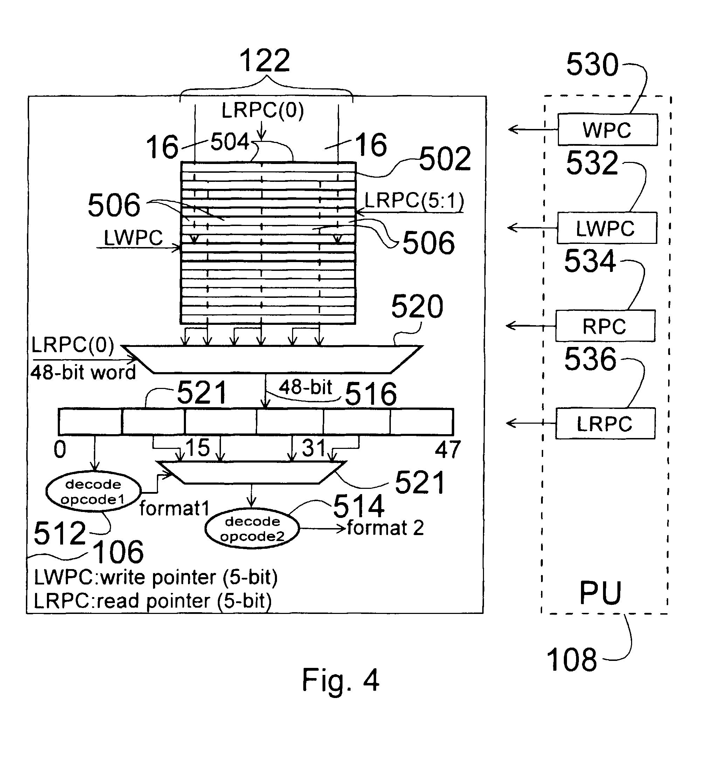

Referring now to Figure 4, there is illustrated an instruction buffer unit 106 in accordance with the present embodiment of the invention, comprising a 32 word instruction buffer queue (IBQ) 502. The IBQ 502 comprises 32×16 bit registers 504, logically divided into 8 bit bytes 506. Instructions arrive at the IBQ 502 via the 32 hit program bus (PB) 122. The instructions are fetched in a 32 bit cycle into the location pointed to by the Local Write Program Counter (LWPC) 532. The LWPC 532 is contained in a register located in the PU 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder/s 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ the next 4 bytes from the program memory are fetched regardless of instruction boundaries. The RPC 534 points to the address in program memory of the instruction currently being dispatched to the decoder/s 512/514.

In accordance with this embodiment, the instructions are formed into a 48 bit word and are loaded into the instruction decoders 512, 514 over a 48 bit bus 516 via multiplexors 520 and 521. It will be apparent to a person of ordinary skill in the art that the instructions may be formed into words comprising other than 48-bits, and that the present invention is not to be limited to the specific embodiment described above.

The bus 516 can load a maximum of 2 instructions, one per decoder, during any one instruction cycle. The combination of instructions may be in any combination of formats, 8, 16, 24, 32, 40 and 48 bits, which will fit across the 48 bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decode thereof. The multiplexing associated with the alignment of instructions with byte boundaries is performed in multiplexor 520 and 521.

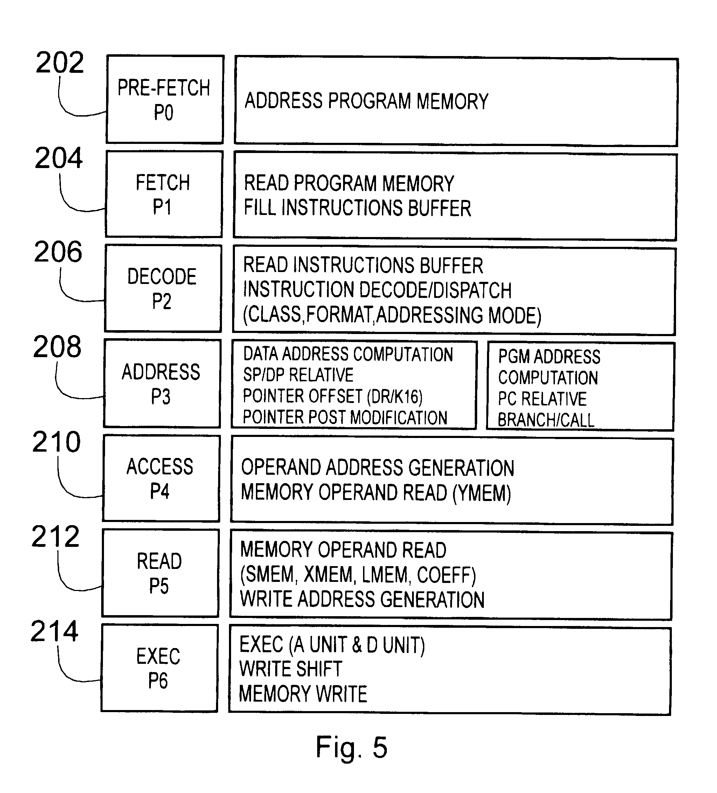

In accordance with a present embodiment the processor core 102 executes instructions through a 7 stage pipeline, the respective stages of which will now be described with reference to Figure 5.

The first stage of the pipeline is a PRE-FETCH (P0) stage 202, during which stage a next program memory location is addressed by asserting an address on the address bus (PAB) 118 of a memory interface 104.

In the next stage, FETCH (P1) stage 204, the program memory is read and the I Unit 106 is filled via the PB bus 122 from the memory interface unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, and the instruction decoded and dispatched to the execution unit for executing that instruction, for example the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in the A Unit 110 or the P Unit 108 respectively.

In an ACCESS (P4) stage 210 the address of a read operand is generated and the memory operand, the address of which has been generated in a DAGEN Y operator with a Ymem indirect addressing mode, is then READ from indirectly addressed Y memory (Ymem).

The next stage of the pipeline is the READ (P5) stage 212 in which a memory operand, the address of which has been generated in a DAGEN X operator with an Xmem indirect addressing mode or in a DAGEN C operator with coefficient address mode, is READ. The address of the memory location to which the result of the instruction is to be written is generated.

Finally, there is an execution EXEC (P6) stage 214 in which the instruction is executed in either the A Unit 110 or the D Unit 112. The result is then stored in a data register or accumulator, or written to memory for Read/Modify/Write instructions. Additionally, shift operations are performed on data in accumulators during the EXEC stage.

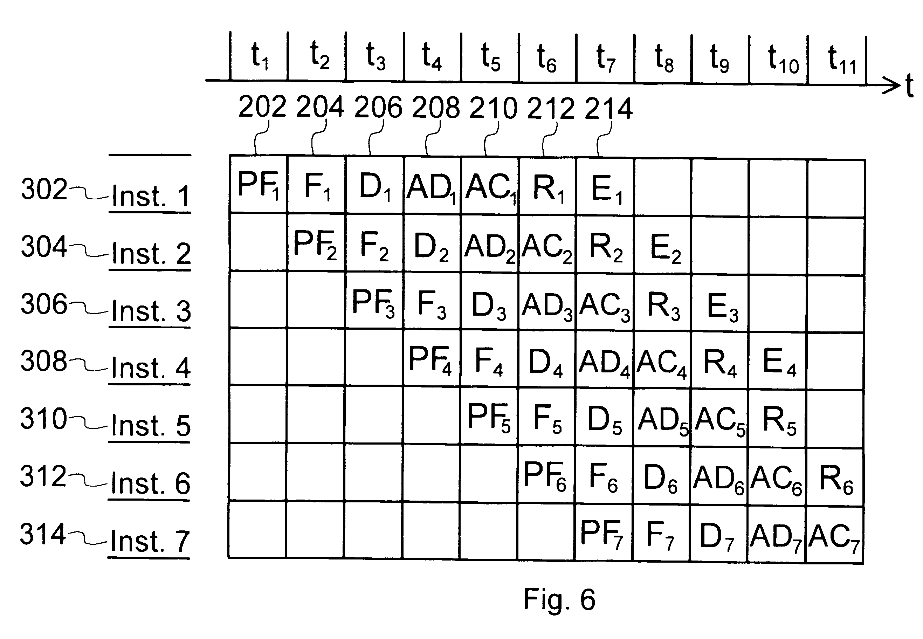

The basic principle of operation for a pipeline processor will now be described with reference to Figure 6. As can be seen from Figure 6, for a first instruction 302, the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 6 for a seven stage pipeline a total of 7 instructions may be processed simultaneously. For all 7 instructions 302-314, Figure 6 shows them all under process in time period T₇. Such a structure adds a form of parallelism to the processing of instructions.

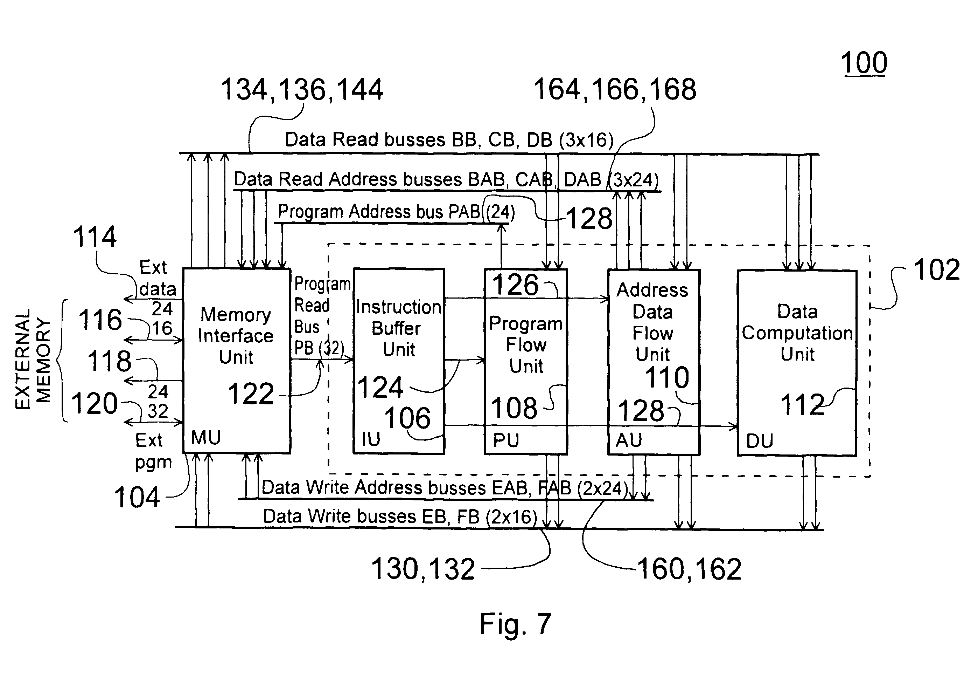

As shown in Figure 7, the present embodiment of the invention includes a memory interface unit 104 which is coupled to external memory units via a 24 bit address bus 114 and a bi-directional 16 bit data bus 116. Additionally, the memory interface unit 104 is coupled to program storage memory (not shown) via a 24 bit address bus 118 and a 32 bit bi-directional data bus 120. The memory interface unit 104 is also coupled to the I Unit 106 of the machine processor core 102 via a 32 bit program read bus (PB) 122. The P Unit 108, A Unit 110 and D Unit 112 are coupled to the memory interface unit 104 via data read and data write buses and corresponding address busses. The P Unit 108 is further coupled to a program address bus 128.

More particularly, the P Unit 108 is coupled to the memory interface unit 104 by a 24 bit program address bus 128, the two 16 bit data write buses (EB, FB) 130, 132, and the two 16 bit data read buses (CB, DB) 134, 136. The A Unit 110 is coupled to the memory interface unit 104 via two 24 bit data write address buses (EAB, FAB) 160, 162, the two 16 bit data write buses (EB, FB) 130, 132, the three data read address buses (BAB, CAB, DAB) 164, 166, 168 and the two 16 bit data read buses (CB, DB) 134, 136. The D Unit 112 is coupled to the memory interface unit 104 via the two data write buses (EB, FB) 130, 132 and three data read buses (BB, CB, DB) 144, 134, 136.

Figure 7 represents the passing of instructions from the I Unit 106 to the P Unit 108 at 124, for forwarding branch instructions for example. Additionally, Figure 7 represents the passing of data from the I Unit 106 to the A Unit 110 and the D Unit 112 at 126 and 128 respectively.

In accordance with a preferred embodiment of the invention, the P Unit 108 is responsive to a switch instruction to switch operation of the processing engine to one of a set of program instruction sequences (sub-routines) according to the value of a variable.

The switch instruction comprises an op-code defining the instruction as a switch instruction, and an argument which may be either the contents of a repeat count index register RPTC, or the contents of a data register DAx located in the A Unit register file 30, for example.

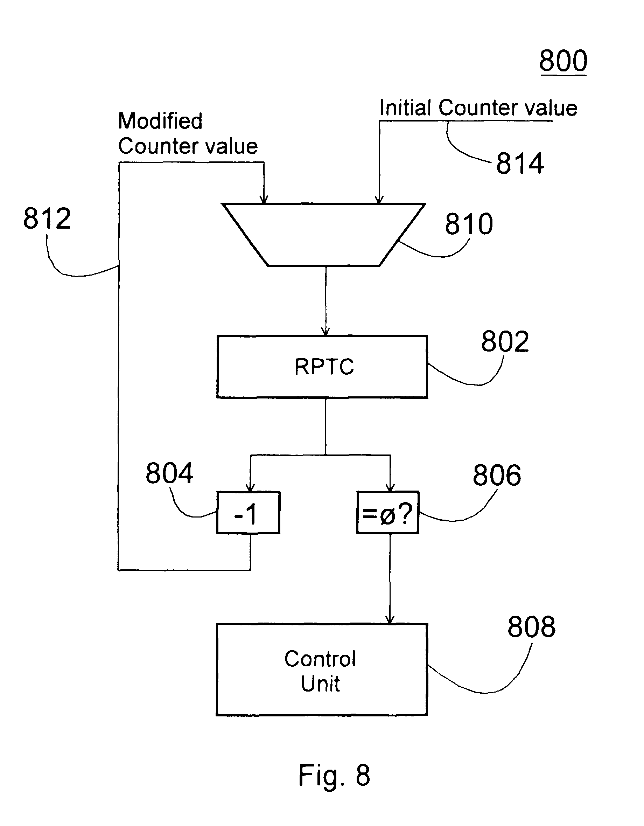

Typical loop control circuitry including a repeat index count register RPTC will now be described with reference to Figure 8 of the accompanying drawings. The loop repeat control circuitry 800 includes repeat count index register RPTC 802 which holds a number indicating how many passes of the loop have occurred. For each pass of the loop, the value contained in RPTC 802 is passed to decrement circuitry 804, and decreased by one. The modified counter value is forwarded over bus 812 to multiplexor 810, where it is further forwarded to RPTC 802, in order to update the value held in RPTC 802. Additionally, for each pass of the loop the current value held in RPTC 802 is passed to a comparator circuitry 806 where the current value is compared to 0. If the current value held in RPTC 802 is equal to 0 then a control signal is output from the comparator circuitry 806 to control unit 808. In response to the control signal output from comparator circuitry 806, the control unit 808 halts further repeats, and returns the operation of the processing engine to sequential program flow. The multiplexor 810 also has input to it an initial counter value over bus 814. The initial counter value sets up the value in RPTC 802 during initiation of a repeat loop.

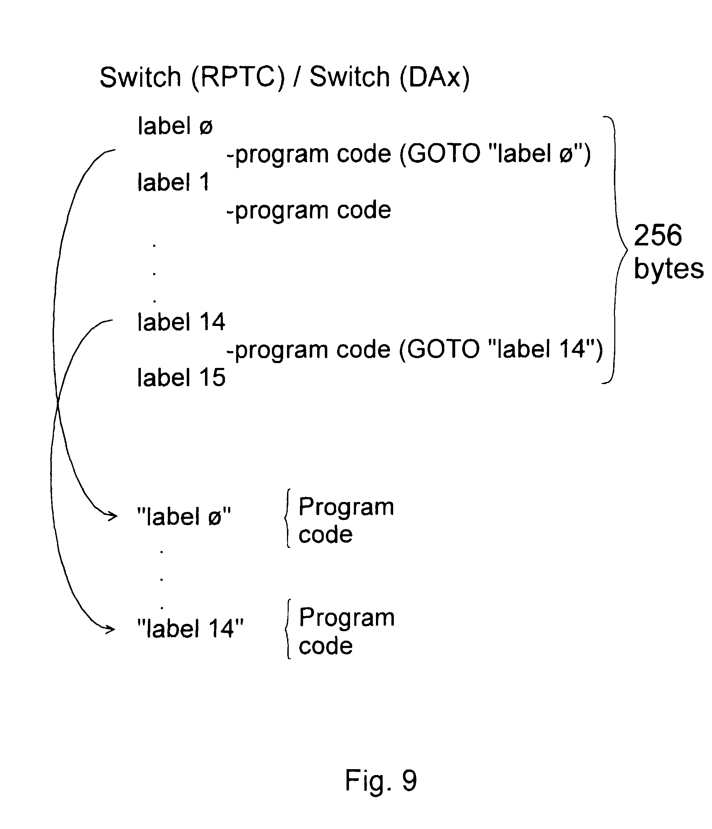

Referring now to Figure 9, operation of the switch instruction will be described. As referred to above, the switch instruction can have either the contents of the RPTC 802 or a data register DAx as an argument. Following the switch instruction, the program memory includes a series of "labels" which are the addresses of the first instructions for respective sets of program code to which the switch instruction may switch program flow. The "labels" (program memory addresses) are spaced apart in a region of program memory typically comprising 256 bytes. The "labels" may be evenly distributed over the 256 byte area of program memory, or may be un-evenly distributed according to the size or program code following each "label".

The switch instruction operates such that the argument provides an offset from the program memory address for the switch instruction to an address location corresponding to one of the "labels". Such addressing is typically referred to as "indirect addressing".

The program code corresponding to each "label" preferably fits within the gap between the label to which it corresponds and the next "label". The program code is then terminated with a suitable instruction which returns the program flow to the sequential program flow, for example takes it to the end of the 256 byte area of memory where the next instruction in the sequential program flow resides. However, if the function or functions corresponding to the "label" require more program code than space available between relevant "labels", then the program code is terminated in a GO TO instruction just prior to the next "label". The GO TO instruction includes an argument which comprises either an offset to an appropriate address in program memory, or an absolute address for the program memory in which the remainder of the program code for executing the function or functions resides.

As shown in Figure 9, "label 0" relates to program code which does not fit within the gap between "label 0" and "label 1", and therefore includes a GO TO instruction to direct program flow to an area of memory which continues to execute instructions corresponding to "label 0". By way of comparison, "label 1" is associated with program code which fits between "label 1" and "label 2" , and therefore does not require a GO TO instruction to a further area of memory.

The syntax of an algorithm utilising the contents of the RPTC register 802 as an argument for a switch instruction, thereby providing an indexed branch, and utilising a "while" repeat loop is shown below.
While ((AC1LT) && (RPTC <#3)) repeat
AC1 =(*AR1) <<#16 - (*AR2+)<<#16
Switch (RPTC)
{RPTC = 0
Case RPTC = 1
Case RPTC = 2}

In the foregoing example, the data instruction AC1 = (*AR1)«#16-(∗AR2+)«#16 is repeated for the value of the accumulator AC 1 being less than 0 and the repeat counter index register contents RPTC 802 being less than 3. The maximum RPTC register value corresponds to the number of elements in data array AR2. The data instruction subtracts the value at the location in the data array pointed to by the current value of AR2 from the value in the data array location pointed to by AR1 and loads the value into accumulator AC1. Pointer AR2 is post-incremented after each execution of the data instruction, and therefore the data array defined by AR2 is sequentially accessed corresponding to each pass of the "while" loop. The "while" loop halts as soon as any of the conditions are not true, and the value of RPTC register 802 is passed as the argument for the switch statement following the "while" loop. The program sequence then jumps to an area of program memory based on the value of the contents of RPTC register 802.

Optionally, the contents of a data register DAx may be updated for each pass of a "while" loop, and the contents of the data register then used as the argument for the switch instruction when the conditions for the "while" loop are not met.

Since RPTC register 802 and the registers DAx are located on the processing core 102, the argument for the switch instruction can be updated quickly, compared to accessing external memory to provide the argument or executing a data instruction to derive the argument.

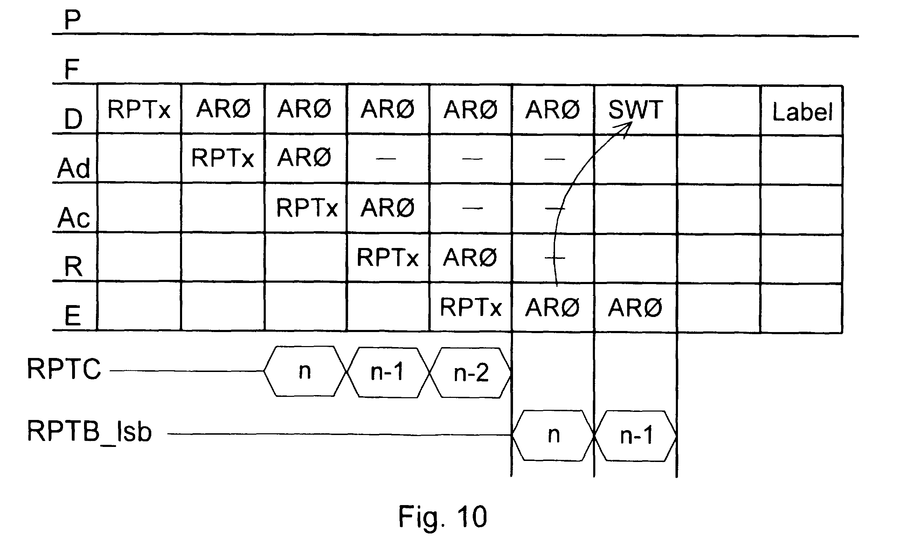

Figure 10 is a diagrammatic illustration of the pipeline stages and threads for a "while" repeat loop setting up the argument for a switch instruction in accordance with a preferred embodiment of the invention. In the example of Figure 10 the contents of a repeat count index register RPTC are decremented in a repeat loop (RPTx) while accumulator ARØ satisfied a particular condition, for example that referred to above in the exemplary algorithm.

When that condition becomes not true the while loop is exited and the switch instruction SWT initiated. The switch instruction then causes the program sequence to jump to the label corresponding to the switch instruction argument, which in this example is the content of the repeat index counter register.

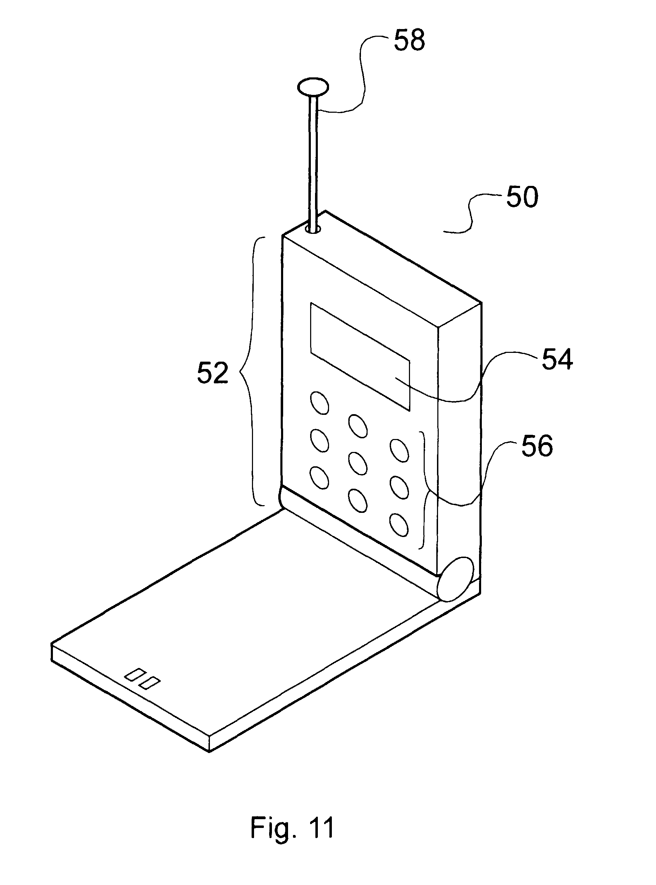

Embodiments of the invention are suitable for wireless communication devices such as a radio telephone 50 illustrated in Fig. 11. Such a radio telephone 50 comprises a user interface 52 including a display 54 such as a liquid crystal display, and a key pad 56. The radio telephone also includes a transceiver, not shown, and an antenna 58.

In view of the foregoing description it will be evident to a person skilled in the art that various modifications may be made within the scope of the invention. For example, the argument for the switch instruction may be defined to include the contents of any suitable register, accumulator or data source.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A processing engine comprising an instruction execution mechanism configurable to modify a value for a condition being true and to switch operation of said processing engine to one of a plurality of tasks in accordance with a current value for said condition being false.

2. A processing engine according to Claim 1, said execution mechanism configurable to respond to a first instruction to execute a repeat loop for modifying said value for said condition being true

3. A processing engine according to Claim 1 or Claim 2, said execution mechanism configurable to execute a data instruction associated with said condition.

4. A processing engine according to Claim 3, said data instruction operable to provide a result determining said condition being true or false.

5. A processing engine according to Claim 3 or Claim 4, said data instruction disposed within the body of a repeat loop.

6. A processing engine according to any one of Claims 2 to 5, said execution mechanism configurable to respond to a second instruction having said current value as an argument for said condition becoming false or switch operation of said processing engine.

7. An processing machine according to Claim 6, said current value including a repeat loop counter and/or value derived by said or a further data instruction.

8. A processing engine according to any one of claims 2 to 7, further comprising a repeat loop control mechanism including a repeat count index register, said processing engine configurable to switch to said one of a plurality of tasks in accordance with the content of said repeat count index register.

9. A processing engine according to any preceding Claim operable in accordance with a sequence of machine-readable instructions storable in program memory pending input to said processing engine said one of a plurality of tasks executable in accordance with one or more instructions sequentially stored in said program memory.

10. A processing engine according to Claim 9, further comprising a program counter for pointing to a program memory location for a next instruction for input to said processing engine, said execution mechanism responsive to said second instruction to modify said program counter contents in accordance with said current value to point to a memory location corresponding to said one of a plurality of tasks.

11. A processing engine according to Claim 10, wherein said memory location corresponding to said task comprises a first instruction of said one or more instructions.

12. A processing engine according to Claim 10, wherein said memory location corresponding to said one of a plurality of tasks comprises a pointer to a program memory location comprising a first instruction of said one or more instructions.

13. A processor comprising a processing engine according to any preceding Claim.

14. A digital signal processor comprising a processing engine according to any one of Claims 1 to 17.

15. An integrated circuit comprising a processing engine according to any one of Claims 1 to 12 or a digital signal processor according to Claim 14.

16. A method for operating a processing engine comprising modifying a value for a condition being true and switching operation of said processing engine to one of a plurality of tasks for said condition being false.

17. A method according to Claim 16, comprising executing a repeat loop for modifying said value for said condition being true.

18. A method according to Claim 16 or Claim 17 comprising executing a data instruction associated with said condition.

19. A method according to Claim 18, comprising executing said data instruction to provide a result for determining said condition being true or false.

20. A method according to any one of Claims 17 to 19, comprising switching operation of said processing engine to a task determined by a value of a repeat loop counter or a value delivered by said data instruction or another data instruction.

21. A method according to claim any one of Claims 16 to 20, further comprising modifying a program counter to point to a program memory location corresponding to said one of a plurality of tasks.

22. A method according to Claim 21, wherein said memory location corresponding to said one of a plurality of tasks comprises a first instruction of a sequence of instructions including one instruction executable by said processing engine for performing said task.

23. A method according to Claim 21, wherein said memory location corresponding to said one of a plurality of tasks comprises a pointer to a program memory location comprising a first instruction of a sequence of instructions including one instruction executable by said processing engine for performing said task.

24. A telecommunications device comprising a processor according to Claim 13 or a digital signal processor according to Claim 14

25. A telecommunications device comprising a processing engine operable in accordance with any one of Claims 16 to 23.

26. A wireless communications device comprising a telecommunications device according to Claim 24 or Claim 25, and further comprising a user interface including a display, a keypad or keyboard for inputting data to the communications device, a transceiver and an antenna.
